Europäisches Patentamt

**European Patent Office**

**Office européen des brevets**

(11) Publication number: **0 097 721**
**A1**

# EUROPEAN PATENT APPLICATION

published in accordance with Art. 158(3) EPC

(21) Application number: **83900064.3**

(22) Date of filing: **20.12.82**

Data of the international application taken as a basis:

(86) International application number:
**PCT/JP82/00473**

(87) International publication number:
**WO83/02325 (07.07.83 83/16)**

(51) Int. Cl.³: **G 01 M 1/16**

---

(30) Priority: **21.12.81 JP 207642/81**

(43) Date of publication of application:
**11.01.84 Bulletin 84/2**

(84) Designated Contracting States:
**DE FR GB**

(71) Applicant: Matsushita Electric Industrial Co., Ltd.
1006, Oaza Kadoma
Kadoma-shi Osaka-fu, 571(JP)

(72) Inventor: SUZUKI, Masaki
20-4-306, Higashinakafuri 1-chome
Hirakata-shi Osaka-fu 573(JP)

(72) Inventor: WADA, Kenji
24-1-405, Miiminami-machi
Neyagawa-shi Osaka-fu 572(JP)

(74) Representative: Crawford, Andrew Birkby et al,
A.A. THORNTON & CO. Northumberland House 303-306
High Holborn
London WC1V 7LE(GB)

(54) **VERTICAL BALANCE TESTING MACHINE.**

(57) Vertical balance testing machine in which a motor (21), (30) is held vertically with springs (32) so as to be capable of vibrating in the horizontal plane, the vibrations of the motor (21), (30) are detected by a vibration detector (34) for measuring the balance of a testpiece (23) being tested on a rotor (21), thereby eliminating the conventional belt drive and thus eliminating any reduction in the S/N ratio of the signal of the detected vibrations by removing the irregular vibrations of the belt and the free vibrations of the spring system due to the belt tension.

FIG. 2

## DESCRIPTION

Technical Field:

This invention relates to a vertical balancing
machine for measuring balance of a rotary object while
rotating, in condition of keeping its axis of rotation
vertical.

Background Art:

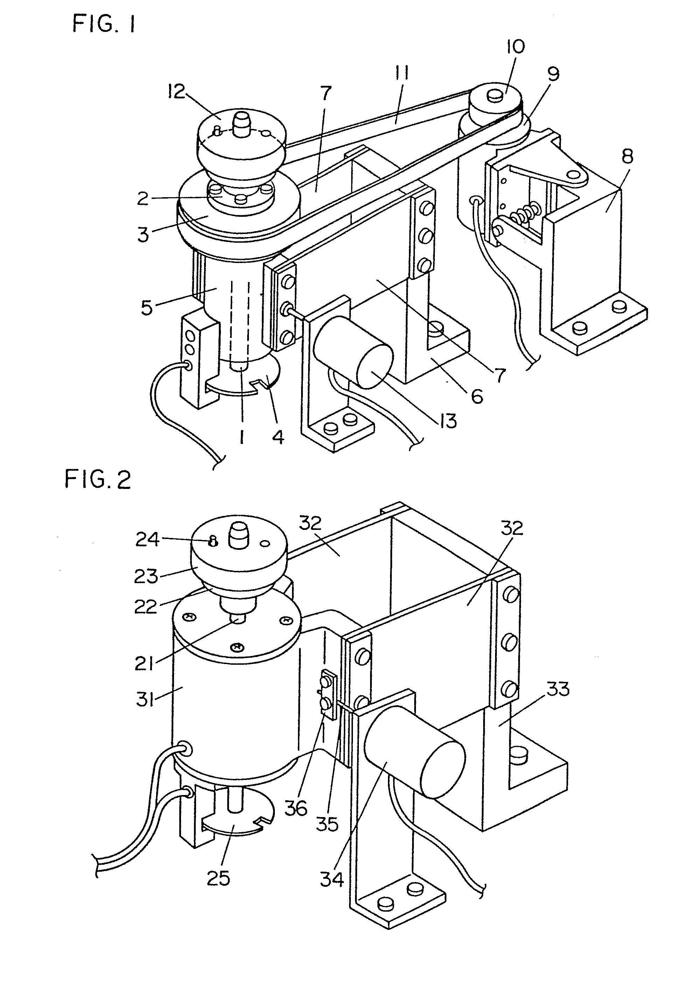

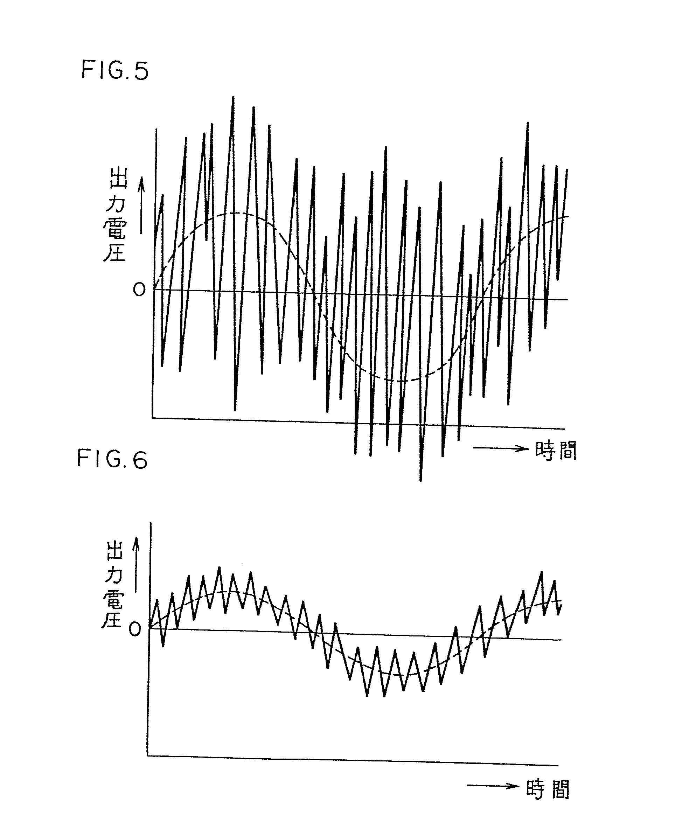

A conventional vertical balancing machine, as
shown in Fig. 1, comprises a measuring shaft 1, a
specimen holder 2 thereon, a pulley 3, a rotary position reference signal generator 4, a bearing frame 5
for rotatably supporting these members, leaf springs
7 holding the bearing frame 5 in relation of enabling
vibration in the horizontal plane with respect to a
body 6 of balancing machine, a motor mounting frame 8,
a motor 9, a motor pulley 10, and a belt 11 for transmitting rotation of motor 9 to the measuring shaft 1,
so that vibrations caused by rotation of an object 12
to be tested is transmitted to the bearing frame 5,
detected by an electrokinetic type vibration detector
13, and then measured by a measuring instrument (not
shown).  The unbalance detection limit of such vertical
type balancing machine has been of poor accuracy because it is about ten times larger than that of a horizontal
balancing machine with respect to the same specimen.
Conventionally, the factor for the above has been so
explained that the vertical balancing machine has been
larger in additional mass, such as the measuring 1,
specimen holder 2, pulley 3 and bearing frame 5 so
that the amplitude of vibration caused by unbalance
decreases in inverse comparison with the sum of these
members and specimen 12. When the vibrations are
carefully viewed, it is understood, as shown by the
output wave form of electrokinetic vibration detector
in Fig. 5, that the output (in the solid line) is of
extremely bad S/N ratio with respect to the basic
component (in the broken line) of vibration caused by
unbalance and also the noise component is irregular
and not stable with time. Such phenomenon is remarkable
when the unbalance is small and the factor of noise is
deemed mainly irregular vibrations of the belt, motor's
vibration added, and disturbance of vibration caused
by restricting free vibration of the spring series
from belt tension. Hence, the conventional vertical
balancing machine, which is larger in noise component
not removed by the measuring instrument, has been
defective in that the measurement with high accuracy
has been hindered. Also, when the use of servomotor in the conventional construction is intended to control the rotational speed and stationary position of specimen, a slip and elasticity of belt and the existence of tension spring have caused the defect in that the follow-up ability and stability of servomotor are improper.

Disclosure of the Invention:

This invention holds an electric motor vertically by spring members to enable it to vibrate on the horizontal plane so that the vibration of motor is detected to measure balance of a specimen placed on a rotor. Hence, conventional belt drive is not necessary and there is no fear that the irregular vibrations and tension of belt restrict the free vibration of spring series to deteriorate the S/N ratio of vibration signal detected, resulting in that the unbalance measuring accuracy can remarkably be raised. Also, the use of servomotor is effective in that the servo control performance for measuring shaft is improved in comparison with the belt drive.

Brief Description of the Drawings:

Fig. 1 is a perspective view of a conventional vertical balancing machine,

Fig. 2 is a perspective view of a first embodiment of a vertical balancing machine of the invention,

Fig. 3 is a vertical sectional view of the embodiment in Fig. 2,

Fig. 4 is a vertical sectional view of a second embodiment of the invention,

Fig. 5 is a wave form chart exemplary of an output of an electrokinetic type vibration detector at the conventional balancing machine,

Fig. 6 is a wave form chart exemplary of an output of the same at the balancing machine of the invention, and

Fig. 7 is a perspective view of a modified example applied with the invention.

Best Mode for Carrying Out the Invention:

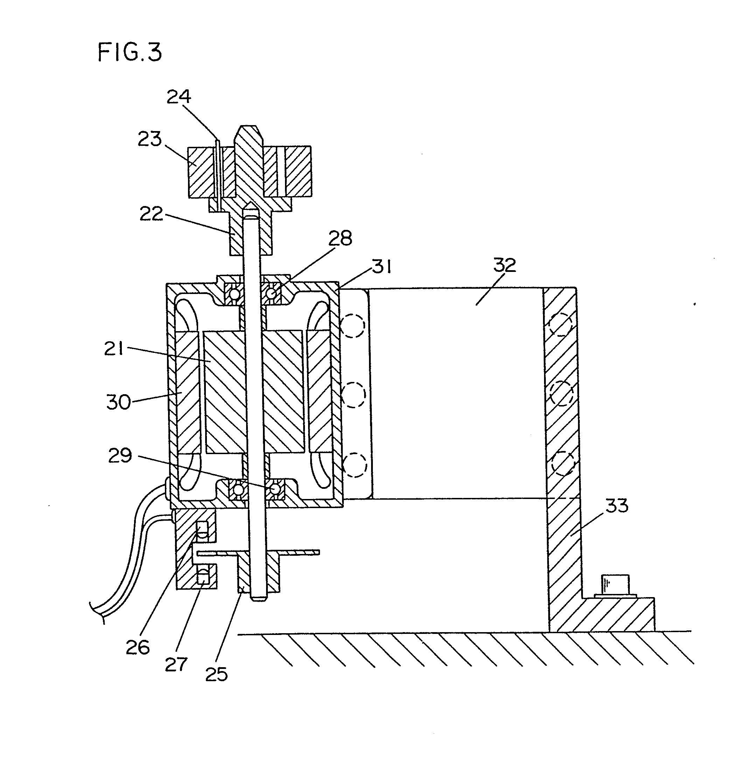

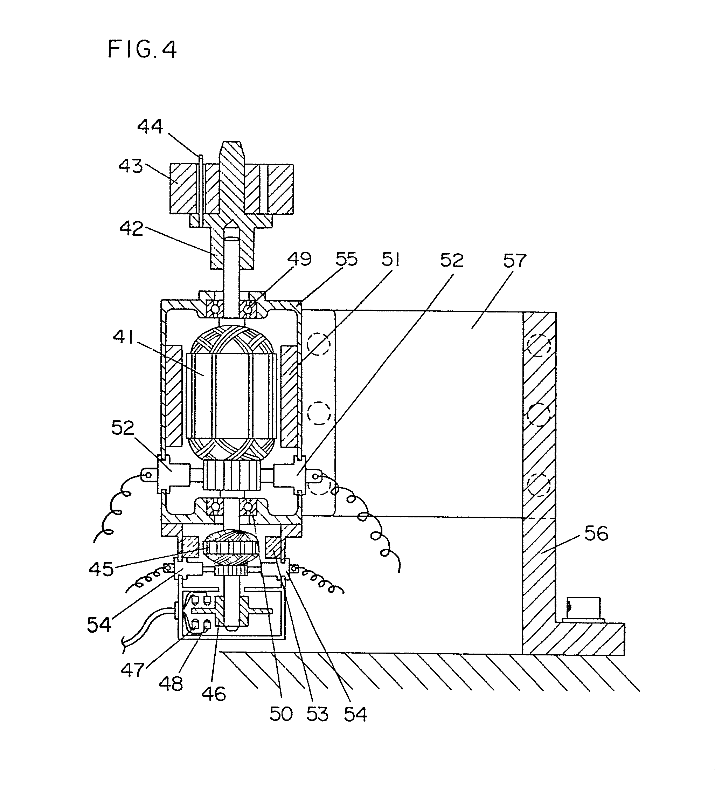

This invention aims at provision of a novel vertical balancing machine which eliminates the conventional defect. A first embodiment of the invention will be described in Figs. 2 and 3, in which reference numeral 21 is a squirrel-cage rotor, 22 designates a specimen holder mounted on a rotor shaft, 23 designates a specimen, 24 designates a pin to catch the specimen 23 for rotation, 25 designates a disc provided at the periphery with a cutout, 26 and 27 designate a pair of photoelectric elements which are disposed to be detectable of the cutout at the disc 25, 28 and 29 designate bearings for supporting vertically the axis of rotor 21, 30 designates a field disposed around the rotor 21, and 31 designates a frame for supporting the bearings 28 and 29 and field 30 and held by a pair of leaf springs 32 in relation of being capable of vibrating horizontally with respect to a body 33 of balancing machine, the frame 31 fixedly supporting through a fitting 36 an end rod 35 of a vibrator at an electrokinetic type vibration detector 34. Operation of the respective components as foregoing is that the rotor 21, bearings 28 and 29, field 30 and frame 31, constitute as a whole an induction motor, the rotor 21 rotating at constant speed to allow the specimen 23 on the specimen holder 22 to rotate, the disc 25 and photoelectric elements 26 and 27 constitute a rotational position reference signal generator to thereby generate a pulse signal once per one full rotation at the position of the predetermined angle, and the specimen 23, specimen holder 22, rotor 21 and disc 25 are affected by unbalance of each of them and unbalance caused by a shift between the axis of specimen holder 22 and that of rotor 21, and generate vibrations during the rotating, the vibration being given as that of frame 31 to the electrokinetic type vibration detector 34, thereby being output therefrom as an electric signal shown in Fig. 6, so that a well-known unbalance

- 5 -

measuring instrument removes from the output signal
various noises or unbalance components of the members
except for the specimen 23, whereby unbalance of
specimen 23 is measured and displayed. The wave form of
vibration signal in Fig. 6 becomes a half of amplitude
of reference wave in comparison with the wave form of
conventional vibration signal in Fig. 5 because the
mass of vibrating units increases about two times, which
is remarkably effective for the small unbalance. In
addition, decrement in amplitude can be amplified with
ease by use of an amplifier. Next, a second embodiment
of the invention will be described according to Fig. 4,
in which reference numeral 41 designates a wound rotor
with a commutator, 42 designates a specimen holder
mounted on the rotor shaft, 43 designates a specimen,
44 designates a pin to catch the specimen 43 for rotation, 45 designates a generator with a commutator for
detecting the rotational speed, 46 designates a disc
provided at the periphery with a number of slits for
angle counting and one slit for detecting the origin,
47 and 48 designate two pairs of photoelectric elements
for angle counting and origin detecting, 49 and 50
designate bearings for supporting vertically the axis
of rotor 41, 51 designates a permanent magnet field
disposed around the rotor 41, 52 designates a pair of carbon brushes, 53 designates a permanent magnet
field disposed around the generator 45, 54 designates
a pair of carbon brushes, and 55 designates a frame
for the machine supporting the bearings 49 and 50,
fields 51 and 53, carbon brushes 52 and 54, and photoelectric elements 47 and 48, the frame 55 being held
by a pair of leaf springs 57 in relation of being
capable of vibrating horizontally with respect to a
body 56 of the balancing machine, and carries the
utmost end of vibrator of the electrokinetic type
vibration detector (not shown). In such construction,
the rotor 41, bearings 49 and 50, field 51, and carbon
brushes 52, constitute as a whole a DC servomotor, the
generator 45, field 53 and carbon brushes 54 constitute a speed detector, and the disc 46 and photoelectric elements constitute a rotary angle detector.

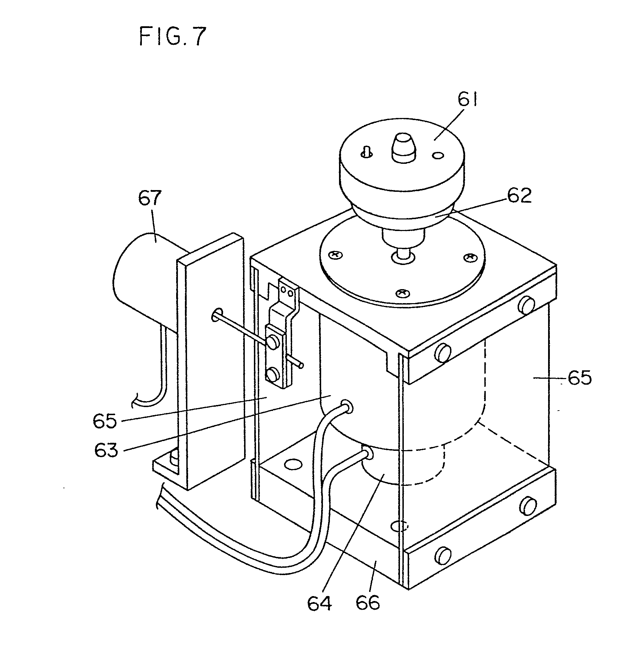

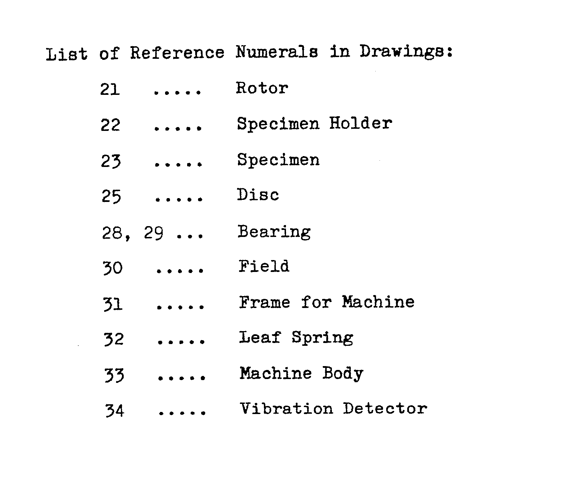

Next, explanation will be given on operation of
the second embodiment. The outputs of speed detector
and rotary angle detector are given to a DC servomotor
control unit (not shown) to thereby optionally control
the rotational speed and stationary position of rotor
41 and the unbalance measurement is carried out similarly to the first embodiment. In addition, a modified
example of second embodiment may electrically process
the pulse signal during the rotation of rotary angle detector so as to obtain voltage proportional to the rotational speed. Another modification of first and second embodiment will be described according to Fig. 7, in which reference numeral 61 designates a specimen, 62 designates a specimen holder, 63 designates a frame having therein a DC servomotor constitution, 64 designates a speed detector and a rotary angle detector, 65 designates a pair of vertical leaf springs holding the frame 63 to enable horizontal vibration with respect to the balancing maching body 66, and 67 designates a vibration detector small-sized more than that in the first or second embodiment.

Industrial Applicability:

As seen from the above, this invention removes the belt drive unit and separate drive motor from the conventional soft type vertical balancing machine and uses the measuring shaft itself as the rotary shaft for the motor, whereby no irregular vibrations are caused by belt transportation and the rotary vibration of motor existing as external vibration not completely removable by the conventional measuring instrument can be picked up as the vibration caused by unbalance in the cycle period the same as the rotational cycle period removable by the same. Furthermore, free vibration of leaf spring is not hindered because of no belt tension, whereby the S/N ratio of signal detected by the vibration detector is generally high, thus being largely effective in improvement of measurement accuracy for unbalance. Also, the balancing machine of the invention is effective in that since large vibrations of the frame during the start or stop of motor driven by the belt is eliminated, the vibration is stabilized quickly to reduce the measurement time, and since no speed reduction is required for improvement of measuring accuracy between the measuring shaft and the motor shaft, it is easy to increase the measuring rotational speed, whereby the measurement accuracy is improvable from the theory in the soft type balancing machine and break-in of belt at a low temperature is not required.

Furthermore, the balancing machine of the invention is simple in construction, small-sized, easy in maintenance, and inexpensive to produce. Also, in control of stationary angle and rotational speed of measuring shaft required for the full automatic unbalance measuring apparatus or the unbalance correction apparatus, the measuring shaft itself functions as the servomotor, thereby being effective in that no slip or elasticity of belt reduces the inertial load of pulley or the like and enables the servo at high speed and of high accuracy.

What is claimed is:

1. A vertical balancing machine comprising a rotor having on a shaft thereof a specimen holder and a rotary position reference signal generator, bearings for supporting the axis of said rotor vertically, a field disposed around said rotor, a frame for holding said bearings and field, spring members for holding said frame in relation of enabling vibration in the horizontal plane with respect to the body of said balancing machine, and a vibration detector, said rotor, bearings, field and frame, constituting an electric motor, so that vibration of said frame for the motor is measured during the operation, thereby measuring unbalance.

2. A vertical balancing machine according to Claim 1, wherein a rotary position detector and a rotational speed detector are provided on the shaft of said rotor, said electric motor is constructed to be a servomotor, and rotational speed control and stationary angle control are made possible.

FIG. I

FIG. 2

FIG.3

FIG.4

FIG.5

出力電圧 ↑

O

→ 時間

FIG.6

出力電圧 ↑

O

→ 時間

FIG.7

1

List of Reference Numerals in Drawings:

| | | |
|---|---|---|
| 21 | ..... | Rotor |
| 22 | ..... | Specimen Holder |
| 23 | ..... | Specimen |
| 25 | ..... | Disc |
| 28, 29 | ... | Bearing |
| 30 | ..... | Field |
| 31 | ..... | Frame for Machine |
| 32 | ..... | Leaf Spring |
| 33 | ..... | Machine Body |
| 34 | ..... | Vibration Detector |

# INTERNATIONAL SEARCH REPORT

International Application No PCT/JP82/00443

## I. CLASSIFICATION OF SUBJECT MATTER (if several classification symbols apply, indicate all) [3]

According to International Patent Classification (IPC) or to both National Classification and IPC

Int. cl.[3]    G01M 1/16

## II. FIELDS SEARCHED

### Minimum Documentation Searched [4]

| Classification System | Classification Symbols |
|---|---|
| I P C | G01M 1/00 – 1/38 |

| Documentation Searched other than Minimum Documentation to the Extent that such Documents are Included in the Fields Searched [5] | |
|---|---|
| Jitsuyo Shinan Koho | 1926 – 1982 |
| Kokai Jitsuyo Shinan Koho | 1971 – 1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP,B1, 39-2194 (Carl Schenck Maschinenfabrik G.m.b.H.), 03. March. 1964 (03.03.64), Page 3 | 1 |
| Y | National Technical Report, Vol. 23, No. 3, (1977) Umezawa Norio and one other, "Wheel Balancer yo Dendoki", P. 492 – 505, Especially see P. 501–504 | 1, 2 |
| Y | DE,B, 1,698,164 (Carl Schenck Maschinenfabrik G.m.b.H) 29. July. 1971 (29.07.71) & US,A, 3,605, 502 | 1 |
| P | JP,A, 57-8430 (Matsushita Electric Industrial Co., Ltd.) 16. January. 1982 (16.01.82) | 1, 2 |
| Y | DE,A, 2,411,843 (Gebr. Hofmann K.G. Maschinenfabrik), 02. October. 1975 (02.10. 75) & FR,A, 2,264,274 & JP,A, 50-128574 & ES,A, 432806 | 2 |

* Special categories of cited documents: [15]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search [2] | Date of Mailing of this International Search Report [3] |
|---|---|
| March 10, 1983 (10.03.83) | March 28, 1983 (28.03.83) |

| International Searching Authority [1] | Signature of Authorized Officer [20] |
|---|---|
| Japanese Patent Office | |

Form PCT/ISA/210 (second sheet) (October 1981)